# EUROPÄISCHE PATENTSCHRIFT

(11) **EP 1 541 069 B1**
(45) Veröffentlichungstag und Bekanntmachung des Hinweises auf die Patenterteilung: **16.08.2006**
(21) Anmeldenummer: 04026006.9
(22) Anmeldetag: 03.11.2004
(51) Int. Cl.: A47J 27/21

(54) **Wasserkessel**
Water kettle
Bouilloire

(30) Priorität: 11.12.2003 DE 10357965
(43) Veröffentlichungstag der Anmeldung: 15.06.2005
(73) Patentinhaber: Braun GmbH, 61476 Kronberg (DE)
(72) Erfinder: Kamprath, Karl-Heinz, 08870 Sitges (Barcelona) (ES); Masip, Josep, 08190 Sant Cugat de Vallés (Barcelona) (ES); Agell, Josep, 08950 Esplugues de Llobregat (Barcelona) (ES)

(56) Entgegenhaltungen:
- WO-A-01/01830
- DE-A1- 19 860 931
- DE-U1- 29 603 838
- GB-A- 2 337 194

## Beschreibung

Die Erfindungen betreffen einen elektrischen Wasserkessel zum Aufheizen von Wasser gemäß den Oberbegriffen der Patentansprüche 1 und 8.

Aus der WO 00/47093 A1 ist bereits ein elektrisch betriebener Wasserkessel bekannt, der bereits seit vielen Jahren von der Anmelderin selbst unter der Bezeichnung "Braun AquaExpress" vertrieben wird. Die Kurzbezeichnung des Gerätetyps lautet dabei WK 210 oder WK 300. Bei diesem Wasserkessel besteht der das Wasser aufnehmende Behälter aus Kunststoff, während sein Boden mit einer metallischen Heizplatte versehen ist, an deren Unterseite eine Thermostateinrichtung befestigt ist. An der Mantelfläche des Kunststoffbehälters sind im oberen Bereich Befestigungseinrichtungen und Lagerstellen ausgebildet, an denen der aus Kunststoff hergestellte schwenkbare Deckel als auch die Entriegelungstaste und die Ein- bzw. Ausschalttaste befestigt sind. Der von der Öffnung des Wasserkessels bis zum Thermostatschalter nach unten führende Dampfkanal ist Bestandteil der Mantelfläche des Kunststoffbehälters, d.h. auch der Dampfkanal wird beim Spritzvorgang des Behälters an diesen mit angeformt.

Weiterhin weist der Behälter im oberen Bereich zwei Lagerzapfen auf, an denen das Hauptteil des Handgriffs mit seinen Lageraugen eingehängt und über Stehbolzen befestigt ist. Im unteren Bereich wird das Hauptteil mit der Behälterwand verschraubt. Zur Verschraubung ist die Behälterwand über den Boden nach unten hinaus so weit verlängert, daß dort Schrauben in die Behälterwand eindringen können, ohne daß Wasser austritt.

Damit sowohl die Entriegelungstaste wie die Schalttaste überhaupt in den Handgriff integriert werden können, muß dieser in zwei Halbschalen, nämlich ein Vorderteil und ein Rückenteil, aufgeteilt sein. Somit entsteht erst nach Einbau der Entriegelungstaste und der Schalttaste in das Vorderteil und anschließendem Verschließen durch das Rückenteil der komplette Handgriff.

Aus der DE-U-29603838 ist weiterhin ein Wasserkocher der eingangs beschriebenen Art bekannt. Dieser Wasserkocher umfaßt im wesentlichen ein zylindrisches, aus rostfreiem Stahl hergestelltes Gefäß, einen dieses verschließenden Schwenkdeckel und einen seitlich daran angeordneten Griff. Auf die genaue Befestigung des Griffes an dem Gefäß wird hier nicht näher eingegangen.

Aufgabe der Erfindung ist es, einen Wasserkessel gemäß dem Oberbegriff derart zu verbessern, daß dieser bruchsicherer und beständiger gegen heißes Wasser. Dabei soll er sich einerseits auch noch einfach montieren lassen und andererseits ollen die bei der Erwärmung des Wasserkessels auftretenden Wärmespannungen ohne Folgeschäden auf den Wasserkessel von diesem besser aufgefangen werden können. Schließlich soll ein Wasserkessel entstehen, dessen Herstellung trotz hochwertiger Ausstattung kostengünstig ist.

Diese Aufgabe wird nach einer ersten Erfindung durch die kennzeichnenden Merkmale des Patentanspruchs 1 gelöst.

Nach der ersten Erfindung wird eine aus Kunststoff hergestellte Trägerplatte geschaffen, die am Metallbehälter befestigt wird und die als Lager- und Aufnahmeteil sowohl für den Deckel wie für die Schalttaste oder sonstige Bedienelemente dient. Da die Integration von Schalt-Anzeigeelementen, und auch die Aufnahme des Deckels zu einem aufwendigen Aufbau eines Metallbehälters führen würde, ist gemäß der Erfindung diese Trägerplatte vorgesehen. Eine derartige Trägerplatte läßt sich nämlich in einem oder mehreren Spritzvorgängen leicht ausformen und sie kann daher aus einem besonders aufwendigen, verschachtelten Bauteil. bestehen, ohne daß die Kosten zur Erstellung des Bauteils sich erheblich erhöhen. Die erfindungsgemäße Trägerplatte hat weiterhin auch den Vorteil, daß vor Montage die Schalttaste, die Entriegelungstaste sowie alle hiermit verbundenen Bauelemente und auch weitere Bedienelemente, falls erforderlich, in der Trägerplatte vormontiert werden können und erst dann an der Behälterwand montiert wird. Der Deckel kann dann in seiner Lagerung an der Trägerplatte eingebracht werden.

Da ein derartiger Wasserkessel zum Zwecke der Temperaturüberwachung in der Regel mit einem Dampfkanal ausgestattet ist, über den Dampf zu dem unterhalb der Heizeinrichtung ausgebildeten Thermostaten geführt wird, wenn das Wasser zu kochen beginnt, ist es vorteilhaft, wenn auch dieser Dampfkanal in der Trägerplatte integriert ist, bzw. in ihr montiert ist. Auch dieser Dampfkanal ist als eigenständiges Bauteil aus Kunststoff ausgeformt und wird anschließend vor Montage der Trägerplatte am Stahlbehälter an dieser montiert.

Weist der Wasserkessel als weiteres Bedienelement zusätzlich noch eine Entriegelungstaste auf, die dazu dient, den Deckel nur dann zu öffnen, wenn die Heizeinrichtung abgeschaltet ist, so kann diese gemäß einer Weiterbildung der Erfindung nach Anspruch 3 ebenfalls in der Trägerplatte gelagert und vormontiert sein. Gleiches gilt für die Sperr- und Entriegelungselemente, wie sie in der zuvor erwähnten WO beschrieben sind. Die dort beschriebene Sicherheitsvorrichtung, bestehend aus Sperrelement, Betätigungselement, Taste, Schubstange, Deckel, Druckfeder, sind auch bei dem Wasserkessel nach der Erfindung Bestandteile, nur sind sie hier nicht am Behälter des Behälters, sondern an der Trägerplatte befestigt, an der hierzu gesonderte Aufnahmen vorgesehen sind. Zur Ausstattung und Funktionsweise kann also direkt auf den Offenbarungsgehalt dieser WO zurückgegriffen werden, der somit auch Bestandteil dieser Anmeldung ist.

Durch die Merkmale des Patentanspruchs 5 wird erfindungsgemäß die Befestigungseinrichtung von einem an der Mantelfläche des Metallbehälters angeschweißten Halteblech gebildet, das Befestigungseinrichtungen aufweist, an die die Trägerplatte befestigt wird. Selbstverständlich wäre es auch denkbar, direkt an die Mantelfläche des Wasserkessels Gewindeaugen, Lagerzapfen oder sonstige Befestigungselemente aus Metall anzuschweißen, dies würde aber die Herstellungskosten des Wasserkessels erhöhen, weil dann viele einzelne Schweißvorgänge erforderlich wären. Viel einfacher ist es daher nach der Erfindung, ein Halteblech im Punktschweißvorgang an die Oberfläche des Behälters anzuschweißen, das dann die zahlreichen Befestigungselemente aufweist. Dieses Halteblech kann nämlich zuvor in einem Stanzvorgang ausgestanzt, entsprechend gebogen und gegebenenfalls mit Gewindestiften oder Gewindeaugen versehen sein. Ein derartiger Vorgang ist schnell und verhältnismäßig kostengünstig durchführbar. Erst dann wird dieses Halteblech in einem einzigen Arbeitsgang an die Mantelfläche des aus Metall hergestellten Behälters angeschweißt, vorzugsweise im Punktschweißverfahren.

Ein weiterer Vorteil besteht darin, daß dieses Halteblech einen geringen Abstand zur Oberfläche des Behälters aufweist und somit als Wärmesperre dient, damit nicht allzu viel Wärme in die aus Kunststoff hergestellten Teile, wie die Trägerplatte und den Handgriff sowie den Deckel, eindringen kann. Hierzu sind an dem Halteblech Abstandsrippen angeformt, die - außer an den Schweißpunkten - das Blech auf Abstand zur Außenfläche des Behälters halten. Ein weiterer Vorteil besteht darin, daß, wenn Gewindeaugen als einer der Befestigungselemente gewählt werden, diese nicht die Oberfläche des Behälters, was sich insbesondere auch an der Innenwand des Behälters zeigen würde, unterbricht, wo dann Schmutz eindringt, der dann verhältnismäßig schwer entfernt werden könnten.

Durch die Merkmale des Patentanspruchs 6 wird der unterschiedlichen Wärmeausdehnung unterschiedlicher Werkstoffe Rechnung getragen, indem der untere Teil der Trägerplatte wie ein festes Lager eingespannt ist, während hingegen der obere Teil sich nach oben hin bei Wärmeeinwirkung unabhängig gegenüber der Wärmeausdehnung des Metallbehälters ausdehnen kann. Hierzu dienen die an den oberen Bohrungen in der Trägerplatte ausgebildeten Langlöcher, die Schrauben durchdringen und die nur so leicht angezogen werden, daß eine Bewegung der Trägerplatte nach oben möglich ist, daß aber diese dennoch über die Verschraubung ortsfest am Behälter gehalten wird. Auf diese Weise werden unzulässig hohe Spannungen in der Trägerplatte vermieden, die gegebenenfalls dann zum Bruch dieser führen könnte.

Besonders vorteilhaft ist es bei dieser Befestigung, wenn die Trägerplatte am oberen Rand der Öffnung zusätzlich noch lose eingehängt ist (Anspruch 7). Auch dann, wenn sich nämlich die Trägerplatte nach oben bei Temperatureinwirkung verlängert, kann diese nicht aus der Einhängung herausgleiten, weil die Überlappung der Trägerplatte mit der Innenwand des Behälters größer ist als die maximale Verformung. Durch die Einhängung der Trägerplatte kann sich diese nach oben hin unter Vermeidung von Spannungen ausdehnen. Da alle Bedienelemente sowie die Sperreinrichtung in der Trägerplatte befestigt sind, wird auch auf dieser keine Spannung infolge Wärmeausdehnung ausgeübt, da sie bei Ausdehnung der Trägerplatte mehr oder weniger angehoben werden, was sich allerdings im Millimeterbereich erstreckt.

Nach der zweiten Erfindung gemäß den Merkmalen des Patentanspruchs 8 weist der Handgriff einen entlang der Mantelfläche des Behälters verlaufenden Befestigungsflansch auf, an dessen Innenseite an Rändern Metalleisten befestigt sind, die in Eingriff mit dem Halteblech gelangen, wenn der Handgriff befestigt wird. Selbstverständlich könnte man auch anstelle der Metalleisten an dem Befestigungsflansch des Handgriffs Haltenasen ausbilden, die einteilig mit dem Handgriff aus Kunststoff ausgeformt sind, doch diese könnten bei Einwirkung unter Temperatur über einen langen Zeitraum schmelzen oder brechen, was zum Lösen des Handgriffs vom Metallbehälter führen könnte. Dies könnte dann verheerende Folgen haben, wenn der Wasserkessel mit kochendem Wasser auf den Boden fällt und kochendes Wasser herumspritzt. Um diesen Fall absolut zu vermeiden, sind daher über die nahezu gesamte Länge des Befestigungsflanschs an den seitlichen Rändern je eine Metalleiste mit federnden Haken angebracht, die bei Montage sich elastisch aufweiten und anschließend den Rand des Halteblechs unverlierbar hintergreifen. Die Metalleisten sind in das Spritzwerkzeug, das den Handgriff ausformt, eingelegt und werden so teilweise formschlüssig umspritzt. Es ist aber auch durchaus möglich, nach dem Spritzvorgang des Handgriffs die Haltebleche an den Rändern des Handgriffs anzulegen und dann mittels am Handgriff ausgebildeten Nasen diese so zu erwärmen, daß sie das Halteblech teilweise formschlüssig umgreifen, ähnlich einem Nietvorgang.

Unabhängig von der Befestigung der Trägerplatte an dem Halteblech wird der Handgriff ebenfalls an dem Halteblech befestigt, wobei hier andere Befestigungspunkte als bei der Befestigung der Trägerplatte benutzt werden. Dies hat den entscheidenden Vorteil, daß bei einwirkender Wärme sowohl auf das Halteblech wie auf den Handgriff sich diese Teile nicht gegenseitig infolge der durch die auftretende Wärmespannung einsetzende Ausdehnung nachteilig beeinflussen können. Dies ist insbesondere dann wichtig, wenn ein langes mechanisches Verbindungsglied, nämlich eine Schubstange, zwischen der Schalttaste und dem Thermoschalter vorhanden ist, das bereits bei geringsten Verschiebungen ein Schaltvorgang auslöst, weil die an dem Thermostatschalter vorgesehenen Schaltwege in sehr engen Toleranzen gehalten sind.

Durch die zweite Erfindung ist es möglich, daß sich der Handgriff bei seiner Erwärmung durch den Stahlbehälter unabhängig gegenüber der Trägerplatte über den Rand des Halteblechs entweder nach oben oder nach unten verschieben kann, weil die Haken in Längsrichtung auf dem Rand, der hier die Funktion einer Schiene übernimmt, hin- und hergleiten können. Auf diese Weise werden Spannungen aufgrund von Temperatureinwirkung am Handgriff vermieden. Dies ist insbesondere deshalb wichtig, weil Kunststoff sich gegenüber Stahl fast um das Siebenfache mehr ausdehnt und daher, wenn diese Kunststoffteile fest mit dem Behälter verschraubt wären, zwangsweise zum Bruch dieser Teile auf längere Zeit führen würden. Die Trägerplatte ist also etwa mittig am Halteblech fest eingespannt und kann sich bei Wärmeeinfluß über die Mitte sowohl nach oben wie nach unten ausdehnen. Diese Ausdehnungen werden bei der konstruktiven Auslegung der einzelnen zusammenwirkenden Bauteile derart berücksichtigt, daß anschließend nach Montage im Betrieb eines erfindungsgemäßen Wasserkessels diese Wärmeausdehnungen so ineinander greifen, daß weder Fehlschaltungen noch Ausfälle durch Wärmeeinwirkung entstehen können.

Selbstverständlich ist es auch denkbar, die Haken bei Montage des Handgriffs nicht radial nach außen aufweiten zu lassen, sondern die Haken und den Rand so auszubilden, daß der Handgriff - ähnlich einer Schiebekulisse - auf den Rand von der einen Seite her augeschoben wird und dabei die beiden gegenüberstehenden Hakenlesten den Rand spielfrei um- bzw. hintergreifen.

Durch die Merkmale des Patentanspruchs 9 wird nun festgelegt, daß der der Öffnung zugewandte Bereich des Handgriffs am Behälter ortsfest befestigt wird, also das Festlager bildet, während sich bei Längenausdehnung das andere Ende zum Boden hin ausdehnen kann. Auf diese Weise kann sich der Handgriff nicht verbiegen und es bleibt dessen Rand immer bündig an der Mantelfläche des Behälters zur Anlage, so daß kein Schmutz von außen in die Vertiefung und die Trägerplatte eindringen kann. Hierzu ist vorteilhafterweise weiterhin der Rand des Befestigungsflansches des Handgriffes so elastisch ausgebildet, daß er stets dicht an der Mantelfläche anliegt.

Nach den Merkmalen des Patentanspruchs 10 ist der Abstand zwischen den gegenüberliegenden Rändern am Halteblech so genau vermaßt und toleriert, was selbstverständlich auch für die Abstände der gegenüberliegenden Haken an den Blechleisten am Handgriff stimmen muß. Dies ist deshalb erforderlich, daß ohne allzu große Anpreßkräfte der Handgriff am Halteblech durch Aufspreizen der Haken und anschließend Hintergreifen der Ränder montiert werden kann. Selbstverständlich könnte man die enge Toleranz über die gesamte Länge des Randes am Halteblech einhalten, dies wäre aber mit erhöhten Kosten verbunden. Daher sind nur diejenigen Bereiche genau toleriert, an denen die Haken angreifen und diese Bereiche mittels plastischer Verformung übergreifen und anschließen hintergreifen müssen. Sind dabei gemäß den Merkmalen des Patentanspruchs 11 diese Bereiche von Vertiefungen gebildet, die in ihrer Längsrichtung etwas größer sind als die Länge der Rasthaken, so müssen nur diese Bereiche in engen Maßen kalibriert werden, was die Herstellkosten reduziert. Die Bereiche müssen länger sein als die Länge der Haken, damit sich bei der Ausdehnung infolge von Temperatureinwirkung die Haken in diesen Bereichen hin- und herbewegen können.

Um den Handgriff über seine Lageraugen an den am Halteblech ausgebildeten Lagerzapfen mittels Stehbolzen zu befestigen, werden die Stehbolzen von oben her über den Handgriff in die Bohrungen der Lageraugen und Lagerzapfen eingeführt, wenn die Bohrungen zueinander fluchten. Will man die Befestigungsstellen des Handgriffs nicht von außen erkennen, so muß man den Handgriff gemäß den Merkmalen des Patentanspruchs 12 im oberen Bereich zweiteilen, was durch einen nach oben offenen Handgriff erfolgt, der anschließend nach Verschließen des Hauptteils durch das Rückenteil von oben her abgedeckt wird. Gleichzeitig wird auch der ganze obere Teil des Trageteils, in dem die Rückstelltaste, die Schalttaste und der Deckel gelagert ist, von oben her abgedeckt und ist somit verliersicher an der Trägerplatte befestigt.

Ein Ausführungsbeispiel beider Erfindungen ist in der Zeichnung dargestellt und wird im folgenden näher erläutert. Es zeigen:
- Fig. 1: einen Längsschnitt durch die Mitte eines erfindungsgemäßen elektrisch betriebenen Wasserkessels, wobei der Schnitt gemäß der Schnittführung I-I nach Fig. 2 geführt wurde,
- Fig. 2: eine Draufsicht in Richtung X von oben auf den Wasserkessel nach Fig. 1, allerdings in verkleinertem Maßstab gegenüber Fig. 1 dargestellt,
- Fig. 3: einen Schnitt quer durch den Wasserkessel gemäß der Schnittführung III-III nach Fig. 1,
- Fig. 4: eine perspektivische Darstellung schräg von der Seite auf die den Handgriff aufnehmende Wasserkesselpartie, wobei allerdings zur besseren Verdeutlichung hier der Handgriff noch nicht montiert ist,
- Fig. 5: eine perspektivische Darstellung auf die Handgriffseite des aus vorzugsweise Edelstahl tiefgezogenen Behälters als Basisteil im noch nicht montierten Zustand, an dessen äußerer Mantelfläche im Handgriffbereich ein Halteblech aufgeschweißt ist,
- Fig. 6: eine perspektivische Darstellung einer aus Kunststoff gespritzten Trägerplatte und
- Fig. 7: eine perspektivische Darstellung eines Handgriffs von der Befestigungsseite her.

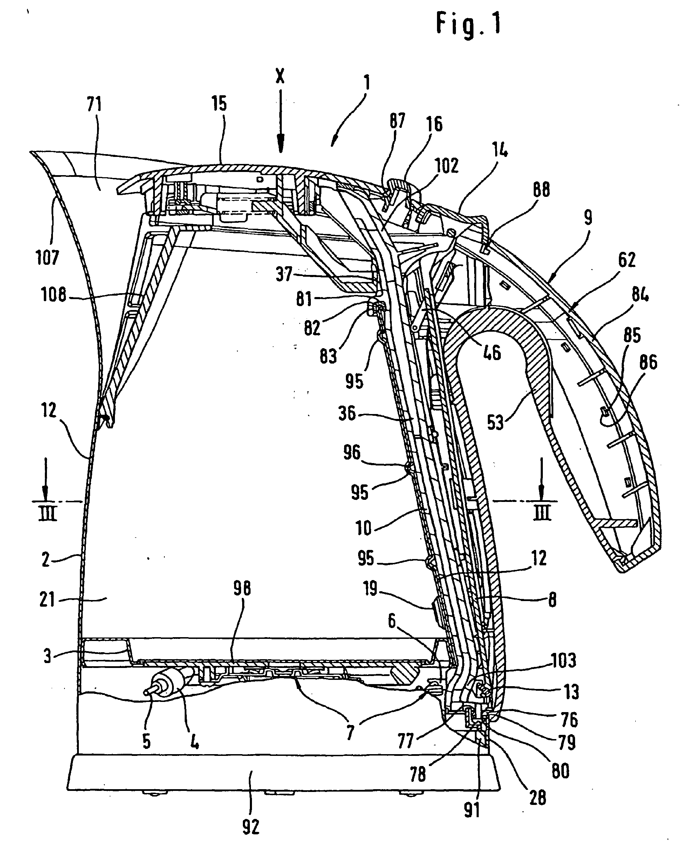

In den Figuren 1 bis 3 besteht der elektrisch betriebene Wasserkessel 1 aus einem aus Metall, vorzugsweise aus nichtrostendem Edelstahl, hergestellten Behälter 2, der im wesentlichen rohrförmig ausgebildet ist. An der Einfüll- bzw. Ausgießöffnung 71 ist eine Schnaupe 107 zum Ein- bzw. Ausgießen von Wasser angeformt. Hinter der Schnaupe 107 befindet sich ein Sieb 108.

Im unteren Bereich des Wasserkessels 1 ist nach Fig. 1 ein aus Edelstahl eingesetzter Boden 3 dichtend befestigt. Unterhalb des Bodens 3 ist an diesem ein ringförmiges elektrisch betriebenes Heizelement 4 gut wärmeleitend befestigt, bzw. mit diesem über eine aus Aluminium hergestellte Diffusionsplatte 98 verlötet oder verschweißt. Das Heizelement 4 weist nach Figur 1 an seinen Enden, wobei nur ein Ende gezeigt ist, je eine Kontaktfahne 5 auf, die über in der Zeichnung nicht dargestellte Leitungen mit einem innerhalb der rohrförmigen Heizung 4 am Boden 3 ausgebildeten Thermostatschalter 7 (nur teilweise angedeutet) stromleitend verbunden ist. Der elektrische Thermostatschalter 7 ist über einen Hebel (nicht dargestellt) und eine Wippe 6 mechanisch mit einer über ein Gelenk 13 abgewinkelten Schubstange 8 verbunden. Die Schubstange 8 verläuft seitlich am Behälter in Fig. 1 nach oben und ist dort mechanisch mit einer Schalttaste 14 verbunden.

An dieser Stelle wird nochmals erwähnt, daß die gesamte Elektrik sowie die mechanische Betätigung der elektrischen Schalteinrichtung und die Hebelanordnung zum Versperren des Deckels 15, die von einem Sperrhebel 46 gesteuert wird, der seinerseits den Deckel 15 und die Entriegelungstaste 16 steuert, bereits in der WO 00/47093 und dem im Handel seit langem erhältlichen Wasserkessel WK 200/300, wie eingangs beschrieben, offenbart ist und daher, falls hieraus Offenbarungselemente für den Gegenstand dieser Anmeldung erforderlich sind, hieraus entnommen und Gegenstand dieser Anmeldung werden können. Zur Vermeidung von Wiederholungen wird daher auf diese Gemeinsamkeiten nicht mehr eingegangen.

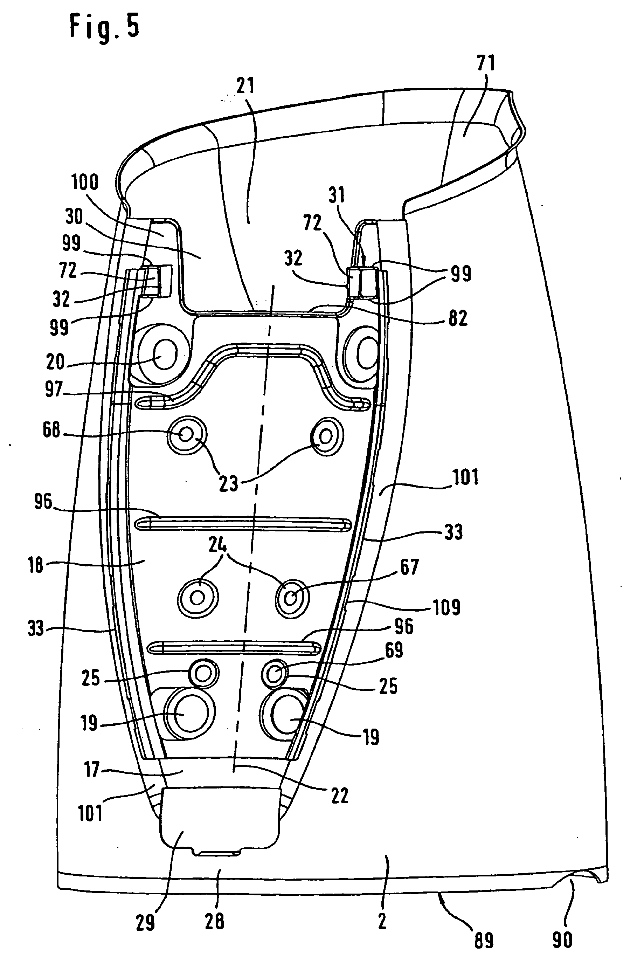

An der Mantelfläche 12 des Behälters 2 ist auf der Höhe eines Handgriffs 9, der später montiert und näher erklärt wird, eine sich von unten nach oben erweiternde Vertiefung 17 angeformt, in der ein entsprechend der Vertiefung 17 angepaßtes Halteblech 18 vorzugsweise im Punktschweißverfahren befestigt ist, wie dies insbesondere Fig. 5 verdeutlicht. Nach den Figuren 1 und 5 stehen an der Innenwand des Behälters 2 horizontal verlaufende Rippen 95 hervor, in die von außen an dem Halteblech 18 entsprechend verlaufende Rippen 96 eingreifen. Im oberen Bereich verläuft die Rippe 95 am Behälter 2 und die Rippe 97 am Halteblech 18 im wesentlichen U-förmig. Die Rippen 95, 96,97 dienen dazu, daß beim Punktschweißvorgang das Halteblech 18 über seine Rippen 96, 97 in den Rippen 95 zentriert werden kann, was die Montage des Halteblechs 18 am Behälter 2 vereinfacht. Sowohl das Halteblech 18 wie der Behälter 2 bestehen aus einem in mehreren Arbeitsgängen aus einem Rohling gezogenen Formteil.

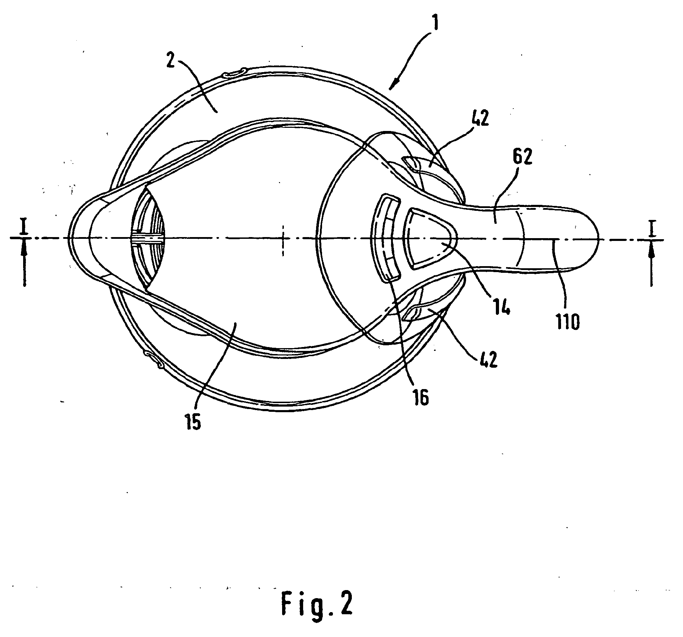

Nach Fig. 5 sind in der Vertiefung 17 im unteren und oberen Bereich zu beiden Seiten einer Längsachse 22 Bohrungen 19, 20 angebracht, die das Behälterinnere 21 nach außen verbinden. Nach Fig. 5 sind die Vertiefung 17 sowie das Halteblech 18 symmetrisch zur Längsachse 22, die senkrecht und leicht zum Behälter 2 nach oben in Richtung der Ausguß- bzw. Einfüllöffnung 71 geneigt verläuft, ausgebildet. Die Mittelachse 110 (Fig. 2) des Handgriffs 9 verläuft ebenfalls symmetrisch zu dieser Längsachse 22. In Fig. 5 sind weiterhin zwischen den Bohrungen 19 und 20 symmetrisch zur Längsachse 22 im Abstand übereinander angeordnete Gewindeaugen 23, 24, 25 nach außen hin ausgewölbt ausgeformt. Am Behälter 2 schließt sich unterhalb des Bodens 3 (Fig. 1) ein Rand 28 an, in dem in Verlängerung der Vertiefung 17 eine Öffnung 29 ausgebildet ist, wie dies Fig. 5 zeigt.

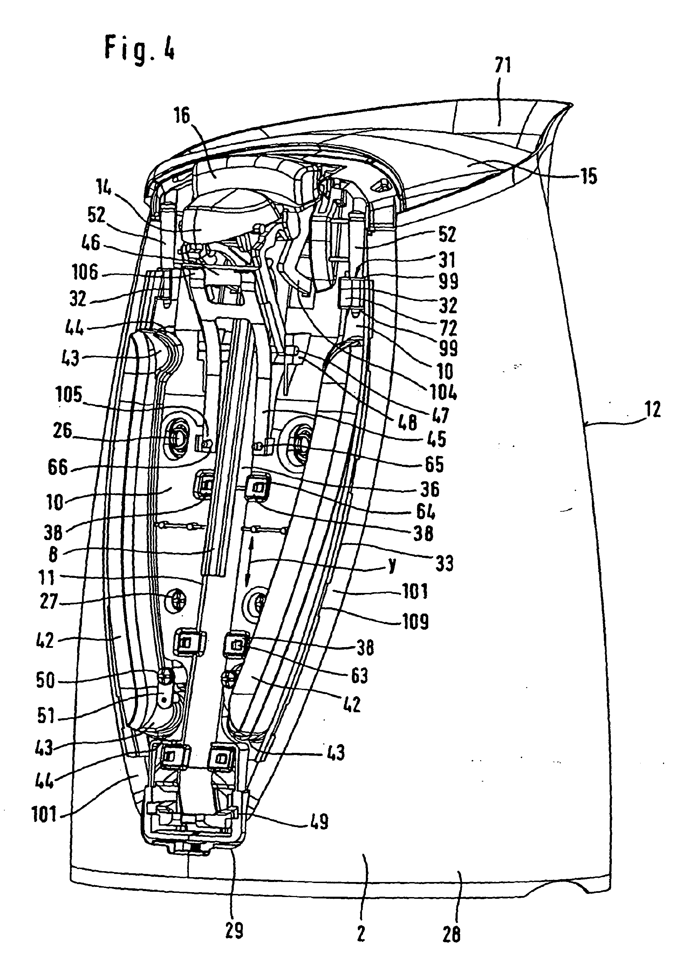

Am oberen Ende ist weiterhin nach Fig. 5 in der Vertiefung 17 ein zur Längsachse 22 symmetrisch ausgebildeter Einschnitt 30 angeordnet, von dessen seitlichen Rändern 100 sich aus Blech geformte Winkelbleche 32 erheben, an dessen übereinander angeordneten Laschen 99 zueinander fluchtende und senkrecht nach oben verlaufende Bohrungen 31 angeordnet sind, wie dies insbesondere aus Figuren 4 und 5 ersichtlich ist. Das Halteblech 18 weist weiterhin nach den Figuren 4 und 5 beiderseits der Längsachse 22 von unten nach oben einen Rand 33 auf, der im wesentlichen parallel und mit Abstand zum äußeren Rand 101 der Vertiefung 17 von unten nach oben verläuft.

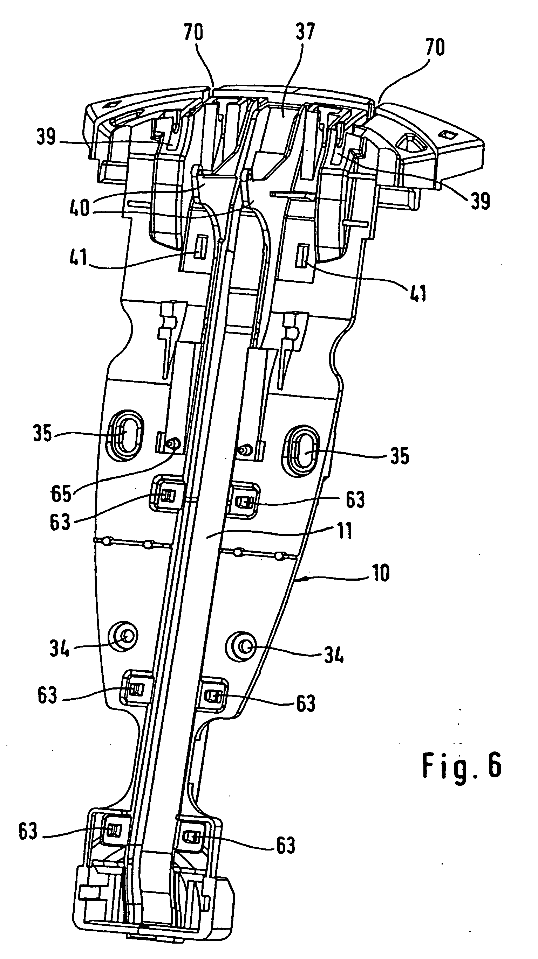

Wie aus Fig. 4 hervorgeht, ist über Schrauben 26, 27, die in die Gewindeaugen 23, 24 am Halteblech 18 eingreifen, eine Trägerplatte 10 an dem Halteblech 18 und somit am Behälter 2 befestigt. Die Trägerplatte 10 ist zur besseren Verdeutlichung nochmals in Fig. 6 als Einzelteil dargestellt. Daraus ist zu erkennen, daß zur Befestigung der Trägerplatte 10 diese im unteren und oberen Bereich Bohrungen 34, 35 aufweist, wobei die unteren Bohrungen 34 im Querschnitt rund und die oberen Bohrungen 35 im Querschnitt nach oben gestreckt oval ausgebildet sind. Dies ist deshalb so, damit aufgrund der bei einwirkender Temperatur sich ergebenden unterschiedlichen Längenänderung von dem aus Edelstahl hergestellten Behälter 2 und der aus Kunststoff hergestellten Trägerplatte 10 sich diese nur nach oben hin verlängern kann. Dazu sind die unteren Schrauben 27 verhältnismäßig fest angeschraubt, während die oberen Schrauben 26 nur so fest angeschraubt sind, daß eine relative Verschiebung der Trägerplatte 10 nach oben möglich ist, aber dennoch die Trägerplatte 10 immer noch fest an dem Halteblech 18 befestigt bleibt. Die Wärmeausdehnung von Kunststoff ist nämlich etwa 6 bis 7 mal größer als von Edelstahl, so daß, um Spannungen an den Bauteilen zu vermeiden, diese sich schadlos ausdehnen müssen.

Wie aus den Figuren 4 und 6 weiter ersichtlich ist, weist die Trägerplatte 10 nach außen hin eine von unten nach oben verlaufende Führungsnut 11 auf, die zur Aufnahme eines geschlossenen, im Querschnitt im wesentlichen viereckigen Dampfkanals 36 dient, der an seinem oberen Ende 102 über die an der Trägerplatte 10 ausgebildete Öffnung 37 in den unterhalb des Deckels 15 ausgebildeten Behälterraum 21 hineinragt und dessen freies offenes untere Ende zum Zwecke der Temperatursteuerung an die Nähe eines Bimetalls (nicht dargestellt) heranreicht, das Teil des Thermoschalters 7 ist (Fig. 1). Der Dampfkanal 36 ist nach Fig. 4 über seitliche Laschen 38 im unteren und oberen Bereich mit der Trägerplatte 10 befestigt. Im oberen Bereich weist die Trägerplatte 10 Längsnuten 70 und Schlitze 39 zur schwenkbaren Aufnahme des Deckels 15 und der Entriegelungstaste 16 auf. Weiterhin sind im oberen Bereich zwei Lagerarme 40 angeordnet, die zur Lagerung der Schalttaste 14 und der Schubstange 8 dienen. Schließlich sind noch zwei Öffnungen 41 vorhanden, die als Durchbruch der Arme 104 der Entriegelungstaste 16 dienen, über die bei Betätigung der Entriegelungstaste 16 der Deckel 15 geöffnet wird. Auf weitere Details der Bedienelemente 14, 16 wird hier nicht näher eingegangen, da diese ebenfalls bereits in dem oben in der WO beschriebenen Wasserkessel entsprechend ausgebildet sind, allerdings dort nicht in einer Trägerplatte, sondern direkt an dem aus Kunststoff ausgeformten Behälter.

Die Trägerplatte 10 ist ebenfalls symmetrisch zur Längsachse 22 der Führungsnut 11 ausgebildet, d.h., die Bohrungen 34, 35, die Schlitze 39, die Lagerarme 40 sowie die Öffnungen 41 sind symmetrisch zur Trägerplatte 10 angeordnet.

Wie aus Fig. 4 ersichtlich ist, sind seitlich vor der Trägerplatte 10 rohrförmige und durchsichtige Wasserstandsanzeigen 42 aus Kunststoff angeordnet, die über Winkelstücke 43 am oberen und unteren Ende in die am Behälter 2 ausgebildeten Bohrungen 19, 20 hineinragen und dort über Dichtringe 44 gegenüber der Wand der Bohrungen 19, 20 des Behälters 2 gedichtet sind. Weiterhin ist an der Trägerplatte 10 eine Blattfeder 45 befestigt, die einen Sperrhebel 46 gegen die Schalttaste 14 federnd drückt. Der Sperrhebel 46 ist über Achsen 47 in Lagerböcken 48 der Trägerplatte 10 gelagert. Auch die Blattfeder 45 wie der Sperrhebel 46 sind symmetrisch zur Längsachse 22 der Trägerplatte 10 angeordnet.

Im unteren Bereich des Behälters 2 ragt nach Fig. 4 die Wippe 6 über die am Behälter 2 ausgebildete Öffnung 29 von innen durch die Trägerplatte 10 und wird in den Zapfaufnahmen 49 an der Trägerplatte 10 von außen her gehalten und geführt. Schließlich werden noch nach Fig. 4 die unteren Abschnitte der Wasserstandsanzeigen 42 von Blechelementen 51, die über Schrauben 50 in den Gewindeaugen 25 befestigt sind, ortsfest gehalten. Bei Temperatureinwirkung können sich die Wasserstandsanzeigen 42 nur nach oben hin ausdehnen und dabei die Dichtringe 44 mehr oder weniger nach oben gegen die Wand der Bohrungen 20 drücken. Dabei muß das Material der Dichtringe 44 so volumig und elastisch sein, daß bei der Wärmeausdehnung keine Undichtigkeit entsteht.

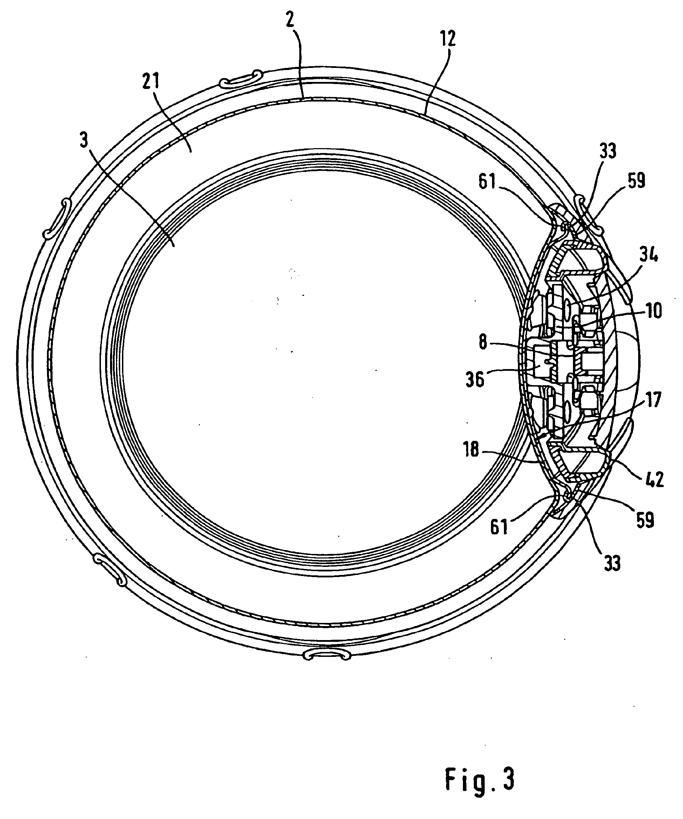

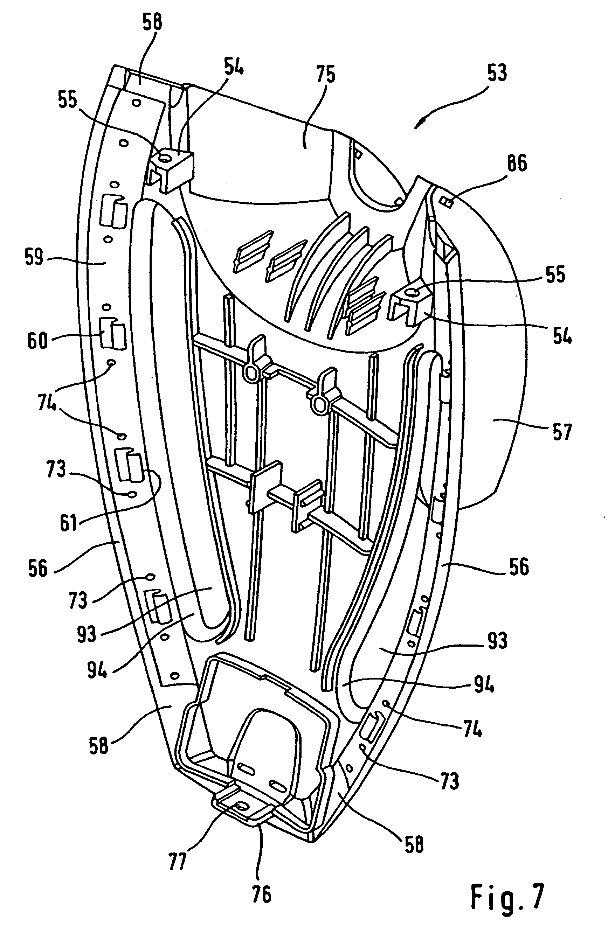

Wie aus Fig. 4 weiterhin ersichtlich ist, sind von oben her in die an den Winkelblechen 32 ausgebildeten Bohrungen 31 Gelenkstifte 52 eingesetzt, die in am Hauptteil 53 des Handgriffs 9 an Vorsprüngen 54 ausgebildete Bohrungen 55 eingreifen (siehe hierzu auch Fig. 7). Das Hauptteil 53 des Handgriffs 9 ist in Fig. 7 von der Innenseite her perspektivisch dargestellt und weist einen von unten nach oben angeformten, als Leisten ausgebildeten Befestigungsflansch 56 zu beiden Seiten auf, zwischen dessen oberen Ende sich die untere Hälfte als Halbschale des eigentlichen Handgriffarmunterteils 57 weg erstreckt, das einteilig mit dem Befestigungsflansch 56 als Kunststoffteil ausgeformt ist. An den beiden Innenseiten der zugewandten Ränder 58 sind von unten nach oben verlaufende Blechleisten 59 befestigt, an denen an im wesentlichen viereckigen Ausnehmungen 60 federnde Haken 61 herausgebogen sind, wie dies insbesondere auch Fig. 3 zeigt. Die Blechleisten 59 weisen über die Länge übereinander angeordnete Bohrungen 73 auf, die von an dem Hauptteil 53 angeformten Zapfen 74 durchdrungen werden. Zur Befestigung der Blechleisten 59 an dem Hauptteil 53 werden die Zapfen 74 durch thermische plastische Verformung derart verformt, daß sie - ähnlich einem Niet - die Blechleiste 59 gegen das Hauptteil 53 pressen. Schließlich wird noch erwähnt, daß das Hauptteil 53 nach Fig. 7 Längsöffnungen 93 aufweist, über die gemäß Fig. 2 die Wasserstandsanzeigen 42 teilweise nach außen ragen, um so den Füllstand im Behälterinnern 21 erkennen zu können, wenn auch der Deckel 15 die obere Einfüllöffnung 71 verschließt. Der Rand 94 der Längsöffnungen 93 liegt im montierten Zustand an der Oberfläche der Wasserstandsanzeige 42 an und hält somit diese gegen radiales Lösen.

Die Montage der Trägerplatte 10, der Bedienelemente 14, 16, der Blattfeder 45, des Sperrhebels 46, des Deckels 15, der Wasserstandsanzeige 42, der Schubstange 8, der Wippe 6 und des Hauptteils 53 mit seinem Rückenteil 62 ist folgende:

Zunächst wird auf der Trägerplatte 10 in der Führungsnut 11 der Dampfkanal 36 montiert, indem er über seine Laschen 38 mit der Trägerplatte 10 mittels Rasthaken 63, die an den Laschen 38 ausgebildete Bohrungen 64 hintergreifen, wie dies Fig. 4 andeutet. Nun wird die Trägerplatte 10 über eine am oberen Ende nach unten hin offene Nut 81 von oben her an dem Rand 82 (Fig. 5) des Einschnitts 30 eingehängt. Anschließend wird die Trägerplatte 10 gemäß Fig. 4 an dem Halteblech 18 angesetzt und über die Schrauben 27 zunächst im unteren Bereich mit dem Behälter 2 verschraubt. Anschließend werden die oberen Schrauben 26 in die Langlöcher 35 eingeführt und mit den Gewindeaugen 23 verschraubt. Die Schrauben 27, 26 können beispielsweise selbstschneidende Schrauben sein, die beim Einschrauben in die Gewindeaugen 25, 23 dort in den Bohrungen 67, 68 Gewinde einschneiden. Es ist aber auch denkbar, in die Bohrungen 67, 68 vorher Gewinde mittels eines Gewindeschneiders einzuschneiden und dann vorzugsweise Schrauben 27, 26 mit metrischem Gewinde zu verwenden. Dies hätte den Vorteil, daß höhere Drehmomente beim Verschrauben aufgebracht werden können und somit eine besonders feste Verbindung besteht. Es könnten aber auch zuvor an der Rückseite des Halteblechs 18 Gewindehülsen angeschweißt werden, so daß längere Gewinde geschaffen werden. Die Trägerplatte 10 wird nicht nur durch die Schrauben 26, 27 am Behälter 2 gehalten, sondern zusätzlich noch im oberen Bereich durch die Nut 81. Dabei ergibt sich auch noch der Vorteil, daß bei Wärmeeinwirkung sich die Trägerplatte 10 nach oben verschieben kann, ohne daß der Rand 82 aus der Nut 81 gleitet. Zur Wärmeisolation und zum reibfesten Eingriff ist noch in der Nut 81 ein U-förmiger Dichtstreifen 83 eingelegt, der den Rand 82 umschließt und der nach Montage in der Nut 81 eingepreßt wird.

Nun werden die beiden Wasserstandsanzeigen 42 mit ihren Winkelstücken 43, auf denen bereits zuvor die Dichtringe 44 aufgesetzt wurden, von außen in die Bohrungen 19, 22 dichtend eingepreßt. Damit die Wasserstandsanzeigen 42 sich nicht während des Gebrauchs und aufgrund von Temperatureinwirkung wieder aus ihren Bohrungen 19, 20 lösen können, werden sie mittels der Schrauben 50 über die an den Gewindeaugen 25 ausgebildeten Bohrungen 69 mit dem Behälter 2 verschraubt. Dabei wird das mit dem Schrauben 50 verbundenes Blechelement 51 gegen das untere Ende der Wasserstandsanzeige 42 gedrückt und hält somit dieses Ende fest am Behälter 2.

Im nächsten Montagegang werden nunmehr über die am oberen freien Ende der Trägerplatte 10 ausgebildeten Schlitze 70 (Fig. 6) die am Deckel 15 ausgebildeten Schwenkarme (nicht dargestellt) eingeführt, so daß der Deckel 15 nach Lösen in die Einfüll- bzw. Ausgießöffnung 71 des Behälters 2 schwenkt und dort zum Anschlag kommt und somit die Einfüll- bzw. Ausgießöffnung 71 verschließt. Anschließend werden die Entriegelungstaste 16, die Schalttaste 14 und der Sperrhebel 46 in den hierzu vorgesehenen Aufnahmen montiert. Schließlich wird noch die mit der Schubstange 8 gelenkig verbundene Wippe 6 so montiert, daß das der Wippe 6 gegenüberliegende freie Ende in Glenkeingriff mit der Schalttaste 14 gelangt, was aber in den Zeichnungen nicht ersichtlich ist, was aber ebenfalls bereits aus der zuvor beschriebenen WO identisch dieser Lösung ist.

Am Schluß wird noch die Blattfeder 45 nach Fig. 4 befestigt, indem ihre an den freien Schenkelenden ausgebildeten Bohrungen 66 auf an der Trägerplatte 10 hervorstehenden Stiften 65 aufgeschoben werden und anschließend deren freien Enden 105 derart mittels Wärme plastisch verformt werden, daß sie - ähnlich einem Niet - die Blattfeder 45 fest an der Trägerplatte 10 halten. Das andere Ende 106 wird so elastisch nach außen verformt, daß es gegen das Sperrelement 46 federnd drückt.

Nun wird das Hauptteil 53 mit seinen Vorsprüngen 54 in die von den Winkelblechen 32 gebildeten, viereckigen Aufnahmen 72 eingesetzt (nicht dargestellt) und ist so zunächst im oberen Bereich gehalten und zentriert. Anschließend wird das Hauptteil 53 mit seinen hervorstehenden Haken 61 so fest gegen die Ränder 33 des Halteblechs 18 gedrückt, daß die Rasthaken 61 sich nach außen hin plastisch verformen, über den Rand 33 springen und den Rand 33 von der zur Mantelfläche 12 des Behälters 2 zugewandten Seite umgreifen (Fig. 1).

Auf diese Weise entsteht eine nur unter Zerstörung wieder lösbare Schnappverbindung zwischen dem Hauptteil 53 und dem Behälter 2. Da das Hauptteil nach den Figuren 4 und 7 von oben her über die Ausnehmung 75 noch offen ist, sind somit auch noch die an den Winkelblechen 32 ausgebildeten Bohrungen 31 sowie die Bohrungen 55 der Vorsprünge 54 von oben her zugänglich, so daß nun die Gelenkstifte 52 in die Bohrungen 31, 55 eingesetzt werden können. Diese Befestigung dient als zweite Haltesicherung des Hauptteils 53 am Behälter 2.

Nach Fig. 1 ist am unteren Bereich des Hauptteils 53 an diesem ein Fortsatz 76 mit einer Bohrung 77 ausgebildet, die eine Schraube 78 (Fig. 1) durchdringt und die in eine am unteren Rand der Öffnung 29 an einem Blechlappen 79 ausgebildete Bohrung 80 eingeschraubt ist und so auch die Trägerplatte 10 nach unten an den Behälter 2 zieht und dort ortsfest hält.

Damit die Entriegelungstaste 16, die Schalttaste 14 und der Deckel 15 nicht nach oben aus der Ausnehmung 75 entnommen werden kann, und damit gleichzeitig das Hauptteil 53 von oben her verschlossen ist, wird zum Schluß noch ein das Hauptteil 53 von oben her verschließendes Rückenteil 84 mit dem Hauptteil 53 über entlang des Rückenteils 84 verlaufende Rastnasen 85, die entsprechend angepaßte Bohrungen 86 durchdringen, verklipst. Dabei ragen die Entriegelungstaste 16 und die Schalttaste 14 über an dem Rückenteil 84 ausgebildete Öffnungen 87, 88 nach außen hervor und sind so von Hand zur Betätigung zugänglich (Fig. 1).

Nach Fig. 5 weist der Behälter 2 von unten her eine Öffnung 89 auf, an deren Rand vorzugsweise diametral gegenüberliegend zwei teilkreisförmige Ausnehmungen 90 ausgebildet sind. Diese Ausnehmungen 90 dienen zur Aufnahme von in der Zeichnung nicht dargestellte Anzeigeelemente in Form von Leuchtkörpern, die dann aufleuchten, wenn der Wasserkocher 1 eingeschaltet ist. Die Anzeigeelemente sind Teil eines in der Öffnung 89 eingesetzten Bodenteils 91 (Fig. 1), das über Schrauben (nicht dargestellt) mit dem Gehäuse des Thermostatschalters 7 verbunden wird. In dem Boden 91 ist eine Stromkupplung (nicht dargestellt) angeordnet, über die beim Aufsetzen auf einen eine entsprechende Stromkupplung aufweisenden Sockel 92 und bei eingeschaltetem Gerät die Heizung 4 mit Strom versorgt wird.

## Patentansprüche

1. Elektrischer Wasserkessel (1) zum Aufheizen von Wasser, mit einem das Wasser aufnehmenden Behälter (2) und einer den Boden (3) des Behälters (2) bildenden Heizplatte, an deren Unterseite ein elektrisches Heizelement (4) befestigt ist, das von einem Thermostatschalter (7) steuerbar ist, der seinerseits bei Betätigung eines Schalters über eine Schalttaste (14) mit einer elektrischen Energiequelle verbindbar ist, wobei am Wasserkessel (1) ein aus Kunststoff hergestellter Handgriff (9) und ein den Behälter (2) verschließender Deckel (15) befestigt ist, wobei der Behälter (2) aus Metall, vorzugsweise aus nichtrostendem Stahl, hergestellt ist,
**dadurch gekennzeichnet,**
**daß** an der Mantelfläche (12) des Behälters (2) eine Befestigungseinrichtung (18) angebracht ist, an der eine Trägerplatte (10) befestigt ist und daß der Deckel (15) an der Trägerplatte (10) gelagert ist.

2. Wasserkessel nach Anspruch 1, wobei der Thermostatschalter über einen Dampfkanal (36) mit der Einfüll- bzw. Ausgießöffnung des Behälters verbunden ist,
**dadurch gekennzeichnet,**
**daß** auch der Dampfkanal (36) an der Trägerplatte befestigt ist.

3. Wasserkessel nach Anspruch 1, wobei der Deckel (15) über eine Entriegelungstaste (16) entriegelbar ist,
**dadurch gekennzeichnet,**
**daß** auch die Entriegelungstaste (16) wie die Schalttaste (14) in der Trägerplatte (10) gelagert sind.

4. Wasserkessel nach Anspruch 3,
**dadurch gekennzeichnet,**
**daß** die mit dem Deckel (15), der Entriegelungstaste (16) und der Schalttaste (14) verbundenen beweglichen Teile (46, 45) in der Trägerplatte (10) gelagert sind.

5. Wasserkessel nach Anspruch 1,
**dadurch gekennzeichnet,**
**daß** die Befestigungseinrichtung (18) aus einem an der Mantelfläche (12) des Behälters (2) befestigten, vorzugsweise angeschweißten Halteblech besteht, daß an dem Halteblech (18) im oberen und unteren Bereich Gewindeaugen (23, 24) ausgebildet sind, über die die Trägerplatte (10) mit dem Halteblech (18) verschraubt ist, wobei an der Trägerplatte (10) ausgebildete Bohrungen (34, 35) von Schrauben (26, 27) durchdrungen werden, die die Trägerplatte (10) gegen das Halteblech (18) ortsfest andrücken.

6. Wasserkessel nach Anspruch 5,
**dadurch gekennzeichnet,**
**daß** die oberen oder die unteren Bohrungen (35, 34) an der Trägerplatte (10) von Langlöchern gebildet werden, die in Längsachse (22) des Behälters (2) verlaufen.

7. Wasserkessel nach Anspruch 5,
**dadurch gekennzeichnet,**
**daß** zur Befestigung der Trägerplatte (10) diese am oberen Rand (82) der Öffnung (71) des Behälters (2) eingehängt und am entgegengesetzten Ende an einer abgewinkelten Befestigungslasche (76) mittels einer Schraubverbindung (78) mit einem am Behälter (2) abgewinkelten Blechlappen (79) verschraubt ist.

8. Wasserkessel nach dem Oberbegriff des Anspruchs 1,
**dadurch gekennzeichnet,**
**daß** an der Mantelfläche (12) des Behälters (2) eine Befestigungseinrichtung (18) angebracht ist, daß die Befestigungseinrichtung (18) aus einem an der Mantelfläche (12) des Behälters (2) befestigten, vorzugsweise angeschweißten Halteblech besteht, daß an dem Handgriff (53) einteilig ein zu beiden Seiten von oben nach unten verlaufender Befestigungsflansch (56) ausgebildet ist, daß an dem Befestigungsflansch (56) beidseitig an den Rändern (58) Blechleisten (59) befestigt sind und daß die Blechleisten (59) in Längsrichtung mehrere Haken (61) aufweisen, die den Rand (33) des Halteblechs (18) nach Montage hintergreifen

9. Wasserkessel nach Anspruch 8,
**dadurch gekennzeichnet,**
**daß** im oberen Bereich des Haltebleches (18) Winkelbleche (32) ausgebildet sind, in die am Handgriff (53) hervorstehende Lageraugen (54) eingreifen, daß die Winkelbleche (32) und die Lageraugen (54) zusammenwirkende Bohrungen (31, 55) aufweisen, die bei Montage des Handgriffs (53) über Gelenkstifte (52) untereinander verbunden werden.

10. Wasserkessel nach Anspruch 8,
**dadurch gekennzeichnet,**
**daß** die Abmessung von der Längsachse (22) zum Rand (33) nur in denjenigen Bereichen in sehr engen Toleranzen gehalten ist, in denen die Haken (61) die entsprechenden Bereiche (109) übergreifen müssen

11. Wasserkessel nach Anspruch 10,
**dadurch gekennzeichnet,**
**daß** die Bereiche durch am Rand (33) in Längsrichtung (22) hintereinander angeordneten Vertiefungen (109) gebildet sind, in die die Haken (61) eingreifen und daß die Breite der Vertiefungen (109) größer ist als die Breite der Haken (61).

12. Wasserkessel nach Anspruch 8,
**dadurch gekennzeichnet,**
**daß** der Handgriff (9) zweigeteilt ist, wobei der dem Behälter (2) zugewandte Teil des Handgriffs (53) und der Befestigungsflansch (56) ein Hauptteil und der Rücken des Handgriffs das Rückenteil (84) bilden, daß das Rückenteil (84) Öffnungen (87. 88) zum Durchdringen einzelner Abschnitte der Entriegelungs- und Schalttaste (16, 24) aufweist und daß das Rückenteil (84) durch Verklipsen mit dem Hauptteil (53) verbunden wird und dabei die Entriegelungs- und Schalttaste (16, 24) ortsfest in ihren Lagerungen an der Trägerplatte (10) gehalten werden.

## Claims

1. An electric kettle (1) for heating water, with a receptacle (2) for accommodating the water and a heating plate that forms the bottom (3) of the receptacle (2), wherein an electric heating element (4) mounted on the underside of the heating plate can be controlled with a thermostat switch (7) that, in turn, can be connected to an electric energy source when a switch is actuated by means of a switching button (14), wherein a handle (9) made of plastic and a lid (15) for closing the receptacle (2) are mounted on the kettle (1), and wherein the receptacle (2) is made of metal, preferably stainless steel,
**characterized in**
**that** a mounting device (18) with a carrier plate (10) mounted thereon is attached to the outer surface (12) of the receptacle (2), and in that the lid (15) is supported on the carrier plate (10).

2. The kettle according to Claim 1, wherein the thermostat switch is connected to a filling and pouring opening of the receptacle via a steam channel (36),
**characterized in**
**that** the steam channel (36) is also mounted on the carrier plate.

3. The kettle according to Claim 1, wherein the lid (15) can be unlocked by means of an unlocking button (16),
**characterized in**
**that** the unlocking button (16) as well as the switching button (14) are also supported in the carrier plate (10).

4. The kettle according to Claim 3,
**characterized in**
**that** the moving parts (46, 45) connected to the lid (15), the unlocking button (16) and the switching button (14) are supported in the carrier plate (10).

5. The kettle according to Claim 1,
**characterized in**
**that** the mounting device (18) consists of a holding plate that is mounted, preferably welded, to the outer surface (12) of the receptacle (2), and in that threaded lugs (23, 24) for screwing the carrier plate (10) to the holding plate (18) are arranged in the upper and lower regions of the holding plate (18), wherein screws (26, 27) extending through bores (34, 35) in the carrier plate (10) stationarily press the carrier plate (10) against the holding plate (18).

6. The kettle according to Claim 5,
**characterized in**
**that** the upper or lower bores (35, 34) in the carrier plate (10) are realized in the form of oblong holes that extend in the longitudinal axis (22) of the receptacle (2).

7. The kettle according to Claim 5,
**characterized in**
**that** the carrier plate (10) is mounted by being secured on the upper edge (82) of the opening (71) of the receptacle (2) and being screwed to an angled sheet metal tab (79) of the receptacle (2) by means an angled mounting bracket (76) arranged on its opposite end with the aid of a screw connection (78).

8. A kettle according to the preamble of Claim 1,
**characterized in**
**that** a mounting device (18) is attached to the outer surface (12) of the receptacle (1), in that the mounting device (18) consists of a holding plate that is mounted, preferably welded, to the outer surface (12) of the receptacle (2), in that an integral mounting flange (56) of the handle (53) extends from the top toward the bottom on both sides, in that sheet metal strips (59) are mounted on the edges (58) on both sides of the mounting flange (56), and in that the sheet metal strips (59) feature several hooks (61) in their longitudinal direction that engage behind the edge (33) of the holding plate (18) after the installation.

9. The kettle according to Claim 8,
**characterized in**
**that** angled plates (32) arranged in the upper region of the holding plate (18) engage into the bearing lugs (54) protruding from the handle (53), and in that the angled plates (32) and the bearing lugs (54) feature cooperating bores (31, 55) that are mutually connected by means of articulated pins (52) during the installation of the handle (53).

10. The kettle according to Claim 8,
**characterized in**
**that** the dimension from the longitudinal axis (22) to the edge (33) is only subject to very strict tolerances in the regions in which the hooks (61) need to overlap the corresponding regions (109).

11. The kettle according to Claim 10,
**characterized in**
**that** the regions into which the hooks (61) engage are realized in the form of depressions (19) that are successively arranged on the edge (33) in the longitudinal direction (22), and in that the width of the depressions (19) is greater than the width of the hooks (61).

12. The kettle according to Claim 8,
**characterized in**
**that** the handle (9) is divided into two parts, wherein the part of the handle (53) that faces the receptacle (2) and the mounting flange (56) from a main part and the rear of the handle forms the rear part (84), in that the rear part (84) contains openings (87, 88) that are penetrated by individual sections of the unlocking button and switching button (16, 24), and in that the rear part (84) is connected to the main part (52) by means of clips such that the unlocking button and switching button (16, 24) are stationarily held in their supports on the carrier plate (10).

## Revendications

1. Bouilloire électrique (1) pour réchauffer de l'eau, avec un récipient (2) pour contenir l'eau et une plaque chauffante formant le fond (3) du récipient (2), sur la face inférieure de laquelle est fixé un corps de chauffe électrique (4) qui peut être contrôlé par un commutateur thermostatique (7) qui pour sa part, lors de la manoeuvre d'un interrupteur par l'intermédiaire d'une touche de commande (14) peut être relié à une source d'énergie électrique, une poignée (9) fabriquée en matière plastique et un couvercle (15) fermant le récipient (2) étant fixés sur la bouilloire (1), le récipient (2) étant fabriqué en métal, de préférence en acier inoxydable,
**caractérisée en ce que** sur la surface de l'enveloppe (12) du récipient (2) est monté un dispositif de fixation (18) sur lequel est fixé une plaque support (10) et **en ce que** le couvercle (15) est logé sur la plaque support (10).

2. Bouilloire selon la revendication 1, le commutateur thermostatique étant relié par l'intermédiaire d'un conduit de vapeur (36) avec l'ouverture de remplissage ou de déversement du récipient,
**caractérisée en ce que** le conduit de vapeur (36) est également fixé sur la plaque support.

3. Bouilloire selon la revendication 1, le couvercle (15) étant déverrouillable par l'intermédiaire d'une touche de déverrouillage (16),
**caractérisée en ce que** également la touche de déverrouillage (16), tout comme la touche de commande (14) sont logées dans la plaque support (10).

4. Bouilloire selon la revendication 3,
**caractérisée en ce que** les éléments mobiles (46, 45) reliés au couvercle (15), à la touche de déverrouillage (16) et à la touche de commande (14) sont logés dans la plaque support (10).

5. Bouilloire selon la revendication 1,
**caractérisée en ce que** le dispositif de fixation (18) est constitué d'une tôle de retenue fixée, de préférence soudée sur la surface d'enveloppe (12) du récipient (2), **en ce que** sur la zone supérieure et inférieure de la tôle de retenue (18), sont conçus des bossages de fonderie (23, 24) par l'intermédiaire desquels la plaque support (10) est vissée sur le tôle de retenue (18), des alésages (34, 35) formés sur la plaque support (10) étant traversés par des vis (26, 27), qui appuient de façon stationnaire la plaque support (10) contre la tôle de retenue (18).

6. Bouilloire selon la revendication 5,
**caractérisée en ce que** les alésages supérieurs ou inférieurs (35, 34) sur la plaque support (10) sont formés par des trous oblongs, qui s'étendent dans l'axe longitudinal (22) du récipient (2).

7. Bouilloire selon la revendication 5,
**caractérisée en ce que** pour la fixation de la plaque support (10), cette dernière est accrochée sur le bord supérieur (82) de l'ouverture (71) du récipient (2) et **en ce que** sur l'extrémité opposée, elle est vissée par une languette de fixation coudée (76) au moyen d'un boulonnage (78) avec une patte de tôle coudée (79) sur le récipient (2).

8. Bouilloire selon le préambule de la revendication 1,
**caractérisée en ce qu'**un dispositif de fixation (18) est monté sur la surface d'enveloppe (12) du récipient (2), **en ce que** le dispositif de fixation (18) est constitué d'une tôle de maintien fixée, de préférence soudée sur la surface d'enveloppe (12) du récipient (2), **en ce qu'**une bride de fixation (56) s'étendant vers les deux côtés, du haut vers le bas est conçue en monobloc sur la poignée (53), **en ce que** des baguettes en tôle (59) sont fixées sur les deux côtés, sur les bords (58) de la bride de fixation (56) et **en ce que** les baguettes en tôle (59) comportent dans le sens de la longueur plusieurs crochets (61) qui après le montage s'engagent par l'arrière dans le bord de la tôle de retenue (18).

9. Bouilloire selon la revendication 8,
**caractérisée en ce que** dans la zone supérieure de la tôle de retenue (18) sont conçues des cornières en tôle (32) dans lesquelles s'engagent les bossages de logement (54) saillant sur la poignée (53), **en ce que** les cornières en tôle (32) et les bossages de logement (54) comportent des alésages coopérants (31, 55) qui lors du montage de la poignée (53) sont reliés entre eux par l'intermédiaire de tiges articulées (52).

10. Bouilloire selon la revendication 8,
**caractérisée en ce que** la dimension de l'axe longitudinal (22) vers le bord (33) n'est maintenue dans de très étroites tolérances que dans les zones dans lesquelles les crochets (61) doivent chevaucher les zones correspondantes (109).

11. Bouilloire selon la revendication 10,
**caractérisée en ce que** les zones sont formées par des empreintes (109 disposées les unes derrière les autres dans le sens longitudinal, dans lesquelles les crochets (61) s'engagent et **en ce que** la largeur des empreintes (109 est supérieure à la largeur des crochets (61).

12. Bouilloire selon la revendication 8,
**caractérisée en ce que** la poignée (9) est en deux parties, la partie de la poignée (53) dirigée vers le récipient (2) et la bride de fixation (56) formant une partie principale et le dos de la poignée formant la partie dorsale (84), **en ce que** la partie dorsale (84) comporte des orifices (87, 88) destinés à traverser des sections individuelles de la touche de déverrouillage et de la touche de commande (16, 24) et **en ce qu'**on relie la partie dorsale (84) par clipsage avec la partie principale (53) et **en ce qu'**à cet effet, la touche de déverrouillage et la touche de commande (16, 24) sont maintenues de façon stationnaire dans leurs logements sur la plaque support (10).
